# EUROPEAN PATENT SPECIFICATION

(11) **EP 4 722 926 B1**
(45) Date of publication and mention of the grant of the patent: **16.09.2026**
(21) Application number: 25205572.8
(22) Date of filing: 30.09.2025
(51) Int. Cl.: G06F 12/02, G06F 3/06

(54) **METHOD AND DEVICE FOR EFFICIENT METADATA MANAGEMENT FOR LARGE BLOCK VOLUME STORAGE**
VERFAHREN UND VORRICHTUNG ZUR EFFIZIENTEN METADATENVERWALTUNG FÜR GROSSBLOCKVOLUMENSPEICHERUNG
PROCÉDÉ ET DISPOSITIF DE GESTION EFFICACE DE MÉTADONNÉES POUR UN STOCKAGE DE GRAND VOLUME DE BLOCS

(30) Priority: 03.10.2024 US 202463702803 P; 29.05.2025 US 202519222147
(43) Date of publication of application: 08.04.2026
(60) Divisional application: 26193047.3 / 4 800 536
(73) Proprietor: SAMSUNG ELECTRONICS CO., LTD., Yeongtong-gu Suwon-si, Gyeonggi-do 16677 (KR)
(72) Inventor: SAHA, Manoj Pravakar, San Jose, CA, 95134 (US); ROY, Somnath, San Jose, CA, 95134 (US); ARUL DHAS, Benixon, San Jose, CA, 95134 (US); ROOGI, Harsh, San Jose, CA, 95134 (US)
(74) Representative: Kuhnen & Wacker Patent- und Rechtsanwaltsbüro PartG mbB

(56) References cited:
- US-A1- 2015 347 026

## Description

### TECHNICAL AREA

The present disclosure relates generally to data storage management systems, and more particularly, to a method for efficiently managing metadata for large block volume storage.

### BACKGROUND

The present background section is intended to provide context only, and the disclosure of any concept in this section does not constitute an admission that said concept is prior art.

With the growing adoption of physical solid state drives (SSDs) (e.g., low-cost quad-level cell (QLC) SSDs) there is a need to address inherent challenges relating to endurance. QLC SSDs provide significant storage density at a lower cost per gigabyte (GB). However, this increased density may result in reduced endurance, as QLC SSDs have a limited number of program/erase cycles, making them more susceptible to wear and degradation over time.

To manage storage operations efficiently, a logical volume manager (herein, volume manager) acts as an intermediary between applications and storage devices, providing a logical abstraction over physical storage. The volume manager may run on a controller or within a host running the applications. Applications may rely on the volume manager to perform operations such as writing data to and reading data from SSDs. To efficiently map logical operations to physical storage locations, the volume manager may utilize a volume map. The volume map establishes a one-to-one relationship between volume logical block addresses (vLBAs) and drive logical block addresses (dLBAs), indicating a physical location of data on the storage media. This mapping is crucial for locating data on the storage media and ensuring efficient data retrieval.

As storage capacities scale up, the size of metadata required to maintain the volume map grows significantly. For example, in a petabyte (PB)-sized logical block volume, the volume map metadata may span several terabytes (TBs). To mitigate the overhead of storing large metadata sets, static volume mapping may be employed. These techniques encode metadata into a smaller number of bytes, allowing dLBAs to be reconstructed by decoding the stored metadata.

To further enhance efficiency, high-speed, non-volatile memory (e.g., compute express link-attached (CXL-attached) persistent memory) may be used for caching and storing metadata. This type of memory offers fast access times and persistence across power cycles, which is ideal for storing volume maps. However, as the size of the static volume map increases, it may exceed the capacity of the memory device, leading to capacity overflow issues. Overflow conditions may result in performance degradation, increased latency, and inefficiencies in managing large-scale block storage systems. US 2015347026 A1 deals with a fixed-sized volume map used by a volume manager.

### SUMMARY

The invention is set out in the appended set of claims. The dependent claims set out particular embodiments.

According to an embodiment, a method is provided in which a volume manager of a device receives a command with a corresponding vLBA set. The volume manager determines a bucket of a variable-granularity volume map (VVM) for block volume storage in a storage device, based on the corresponding vLBA set. Entries of the VVM are divided into buckets and the entries comprise a variable vLBA range. The volume manager determines an entry for the vLBA set in the VVM or a fine-grained volume map (FVM) for the block volume storage, based on the determined bucket. The FVM includes a per vLBA granularity.

According to this embodiment, the buckets may correspond to respective vLBA ranges, and the corresponding vLBA set may be within a vLBA range of the determined bucket. The command may be a write command. When the determined bucket includes an empty entry, the corresponding vLBA set may be encoded for the VVM and the encoded vLBA set may be written to the entry of VVM. When the determined bucket is without an empty entry, the corresponding vLBA set may be encoded for the FVM and the encoded vLBA set may be written to the FVM. Alternatively, a vLBA set may be evicted from the entry of the VVM, the corresponding vLBA set may be encoded for the VVM, the encoded vLBA set may be written to the entry of the VVM, the evicted vLBA set may be encoded for the FVM, and the evicted vLBA set may written to the FVM.

According to this embodiment, the command may be a write command, the corresponding vLBA set may be encoded for the VVM, and the entry of the VVM may be updated with the encoded vLBA set. When the command is a write command and the determined bucket includes an empty entry, an existing entry of the VVM may be updated with a portion of the corresponding vLBA set, a remainder of the corresponding vLBA set may be encoded for the VVM, and the encoded remainder of the vLBA set may be written to the entry of the VVM. When the determined bucket is without an empty entry, an existing entry of the VVM may be updated with a portion of the corresponding vLBA set, a remainder of the corresponding vLBA set may be encoded for the FVM, and the encoded remainder of the vLBA set may be written to the FVM.

According to this embodiment, the command may be a read command, the entry may be in the VVM, and a dLBA of the entry may be reconstructed using decoded information from the entry and a segment map for the block volume storage. When an entry marker in the determined bucket indicates FVM storage, a dLBA of the entry of the FVM may be reconstructed using a segment map for the block volume storage.

According to an embodiment, a device is provided including a controller and a non-transitory computer readable storage medium storing instructions. When executed, the instructions cause the controller to receive a command with a corresponding vLBA set, and determine a bucket of a VVM for block volume storage in a storage device, based on the corresponding vLBA set. Entries of the VVM are divided into buckets and the entries comprise a variable vLBA range. The instructions further cause the controller to determine an entry for the vLBA set in the VVM or an FVM for the block volume storage, based on the determined bucket. The FVM includes a per vLBA granularity.

According to this embodiment, the buckets may correspond to respective vLBA ranges, and the corresponding vLBA set may be within a vLBA range of the determined bucket. The command may be a write command. When the determined bucket includes an empty entry, the instructions may cause the controller to encode the corresponding vLBA set for the VVM and write the encoded vLBA to the entry of VVM. When the determined bucket is without an empty entry, the instructions may cause the controller to encode the corresponding vLBA set for the FVM and write the encoded vLBA set to the FVM. Alternatively, the instructions may cause the controller to evict a vLBA set from the entry of the VVM, encode the corresponding vLBA set for the VVM, write the encoded vLBA set to the entry of the VVM, encode the evicted vLBA for the FVM, and write the evicted vLBA set to the FVM.

According to this embodiment, the command may be a write command, and the instructions may cause the controller to encode the corresponding vLBA set for the VVM and update the entry of the VVM with the encoded vLBA set. When the command is a write command and the determined bucket includes an empty entry, the instructions may cause the controller to update an existing entry of the VVM with a portion of the corresponding vLBA set, encode a remainder of the corresponding vLBA set for the VVM, and write the encoded remainder of the vLBA set to the entry of the VVM. When the determined bucket is without an empty entry, the instruction may cause the controller to update an existing entry of the VVM with a portion of the corresponding vLBA set, encode a remainder of the corresponding vLBA set for the FVM, and write the encoded remainder of the vLBA set to the FVM.

According to this embodiment, the command may be a read command, the entry may be in the VVM, and the instructions may cause the controller to reconstruct a dLBA of the entry using decoded information from the entry and a segment map for the block volume storage. When an entry marker in the determined bucket indicates FVM storage, the instructions may cause the controller to reconstruct a dLBA of the entry of the FVM using a segment map for the block volume storage.

### BRIEF DESCRIPTION OF THE DRAWINGS

The drawings described below are examples of how embodiments of the disclosure may be implemented, and are not intended to limit embodiments of the disclosure. Individual embodiments of the disclosure may include elements not shown in particular figures and/or may omit elements shown in particular figures. The drawings are intended to provide illustration and may not be to scale. The above and other aspects, features, and advantages of certain embodiments of the present disclosure will be more apparent from the following detailed description, taken in conjunction with the accompanying drawings, in which:
FIG. 1 is a diagram illustrating a data storage management system for processing commands in an electronic device, according to an embodiment of the present disclosure;
FIG. 2 is a diagram illustrating a block volume storage and volume map, according to an embodiment of the present disclosure;
FIG. 3 is a diagram illustrating an entry of a volume map, according to an embodiment of the present disclosure;
FIG. 4 is a diagram illustrating volume maps in a persistent or non-volatile memory, according to an embodiment of the present disclosure;
FIG. 5 is a diagram illustrating VVM pages, according to an embodiment of the present disclosure;
FIG. 6 is a flowchart illustrating a method for pre-processing vLBAs of a received command, according to an embodiment of the present disclosure;
FIG. 7 is a flowchart illustrating a method for vLBA insertion to a volume map in response to a write command, according to an embodiment of the present disclosure;
FIG. 8 is a flowchart illustrating a method for retrieving an entry using a volume map in response to a read command, according to an embodiment of the present disclosure; and
FIG. 9 is a block diagram of an electronic device in a network environment for processing commands, according to an embodiment of the present disclosure.

### DETAILED DESCRIPTION

Hereinafter, embodiments of the present disclosure are described in detail with reference to the accompanying drawings. It should be noted that the same elements will be designated by the same reference numerals although they are shown in different drawings. In the following description, specific details such as detailed configurations and components are merely provided to assist with the overall understanding of the embodiments of the present disclosure. Therefore, it should be apparent to those skilled in the art that various changes and modifications of the embodiments described herein may be made without departing from the scope of the present disclosure. In addition, descriptions of well-known functions and constructions are omitted for clarity and conciseness. The terms described below are terms defined in consideration of the functions in the present disclosure, and may be different according to users, intentions of the users, or customs. Therefore, the definitions of the terms should be determined based on the contents throughout this specification.

The present disclosure may have various modifications and various embodiments, among which embodiments are described below in detail with reference to the accompanying drawings. However, it should be understood that the present disclosure is not limited to the embodiments, but includes all modifications, equivalents, and alternatives within the scope of the present disclosure.

Although the terms including an ordinal number such as first, second, etc. may be used for describing various elements, the structural elements are not restricted by the terms. The terms are only used to distinguish one element from another element. For example, without departing from the scope of the present disclosure, a first structural element may be referred to as a second structural element. Similarly, the second structural element may also be referred to as the first structural element. As used herein, the term "and/or" includes any and all combinations of one or more associated items.

The terms used herein are merely used to describe various embodiments of the present disclosure but are not intended to limit the present disclosure. Singular forms are intended to include plural forms unless the context clearly indicates otherwise. In the present disclosure, it should be understood that the terms "include" or "have" indicate existence of a feature, a number, a step, an operation, a structural element, parts, or a combination thereof, and do not exclude the existence or probability of the addition of one or more other features, numerals, steps, operations, structural elements, parts, or combinations thereof.

Unless defined differently, all terms used herein have the same meanings as those understood by a person skilled in the art to which the present disclosure belongs. Terms such as those defined in a generally used dictionary are to be interpreted to have the same meanings as the contextual meanings in the relevant field of art, and are not to be interpreted to have ideal or excessively formal meanings unless clearly defined in the present disclosure.

The terms used in the present disclosure are not intended to limit the present disclosure but are intended to include various changes, equivalents, or replacements for a corresponding embodiment. With regard to the descriptions of the accompanying drawings, similar reference numerals may be used to refer to similar or related elements. A singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, terms such as "1^{st}," "2^{nd}," "first," and "second" may be used to distinguish a corresponding component from another component, but are not intended to limit the components in other aspects (*e.g.,* importance or order). It is intended that if an element (*e.g.,* a first element) is referred to, with or without the term "operatively" or "communicatively", as "coupled with," "coupled to," "connected with," or "connected to" another element (*e.g.,* a second element), it indicates that the element may be coupled with the other element directly (*e.g.,* wired), wirelessly, or via a third element.

As used herein, the term "module" may include a unit implemented in hardware, software, firmware, or combination thereof, and may interchangeably be used with other terms, for example, "logic," "logic block," "part," and "circuitry." A module may be a single integral component, or a minimum unit or part thereof, adapted to perform one or more functions. For example, according to one embodiment, a module may be implemented in a form of an application-specific integrated circuit (ASIC), a co-processor, or field programmable gate arrays (FPGAs).

An electronic device, according to one embodiment, may be one of various types of electronic devices utilizing storage devices (e.g., memory devices). The electronic device may use any suitable storage and/or interconnect interface standard, such as, for example, peripheral component interconnect express (PCIe), nonvolatile memory express (NVMe), NVMe-over-fabric (NVMeoF), advanced extensible interface (AXI), ultra path interconnect (UPI), ethernet, transmission control protocol/Internet protocol (TCP/IP), remote direct memory access (RDMA), RDMA over converged ethernet (ROCE), fibre channel (FC), infiniband (IB), serial advanced technology attachment (SATA), small computer systems interface (SCSI), serial attached SCSI (SAS), Internet wide-area RDMA protocol (iWARP), and/or the like, or any combination thereof. In some embodiments, an interconnect interface may be implemented with one or more memory semantic and/or memory coherent interfaces and/or protocols including one or more compute express link (CXL) protocols such as CXL.mem, CXL.io, and/or CXL.cache, Gen-Z, coherent accelerator processor interface (CAPI), cache coherent interconnect for accelerators (CCIX), and/or the like, or any combination thereof. Any of the memory devices may be implemented with one or more of any type of memory device interface including double data rate (DDR), DDR2, DDR3, DDR4, DDR5, low-power DDR (LPDDRX), open memory interface (OMI), Nvlink high bandwidth memory (HBM), HBM2, HBM3, and/or the like. The electronic devices may include, for example, a portable communication device (*e.g.,* a smart phone), a computer, a portable multimedia device, a portable medical device, a camera, a wearable device, or a home appliance. However, an electronic device is not limited to those described above.

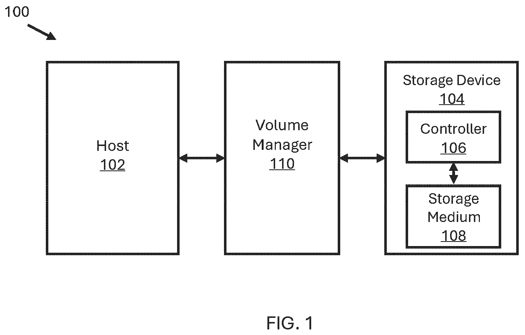

FIG. 1 is a diagram illustrating a data storage management system for processing commands in an electronic device, according to an embodiment. A storage system 100 includes a host 102 and a storage device 104 (e.g., a memory device). Although one host and one storage device are depicted, the storage system 100 may include multiple hosts and/or multiple storage devices. The storage device 104 may be an SSD, a universal flash storage (UFS), etc. The storage device 104 includes a controller 106 and a storage medium 108 connected to the controller 106. The controller 106 may be an SSD controller, a UFS controller, etc. The storage medium 108 may include a volatile memory, a non-volatile memory, or both, and may include one or more flash memory chips (or other storage media). The controller 106 may include one or more processors, one or more error correction circuits, one or more FPGAs, one or more host interfaces, one or more flash bus interfaces, etc., or a combination thereof. The controller 106 may be configured to facilitate transfer of data/commands between the host 102 and the storage medium 108. The host 102 sends data/commands to the storage device 104 to be received by the controller 106 and processed in conjunction with the storage medium 108. A volume manager 110 may be disposed between the host 102 and the storage device 104. Alternatively, the volume manager 110 may be within the host 102 itself. Accordingly, the volume manager 110 may run on a controller or within the host 102 in order to map vLBAs to dLBAs on the storage device 104.

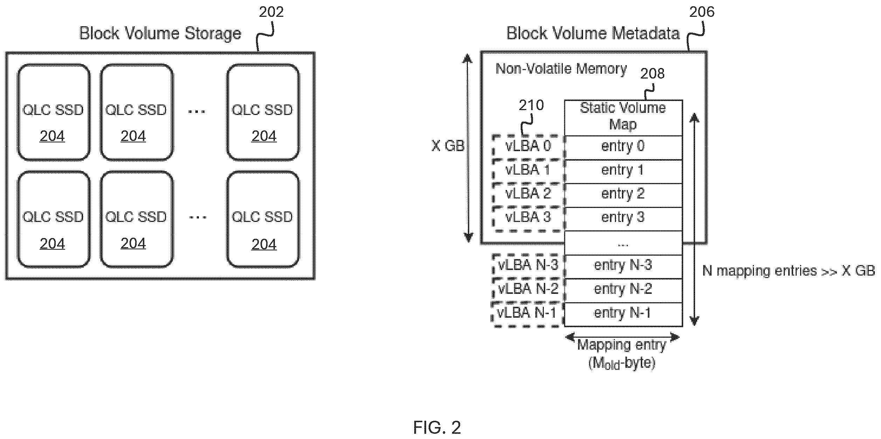

FIG. 2 is a diagram illustrating a block volume storage and block volume metadata, according to an embodiment. A block volume storage 202 may include data divided into individual blocks that can be directly accessed by a compute instance. The block volume storage 202 may provide high-performance, flexible storage that can be rapidly read and written to, which is ideal for demanding workloads. The block volume storage 202 may be a fast, scalable storage solution that utilizes SSD technology to deliver quick data access. For example, the block volume storage 202 may include a series of QLC SSDs 204.

Block volume metadata may be provided in a non-volatile memory 206. The non-volatile memory 206 may include a static volume map 208, which may be utilized by a volume manager in placing data to and retrieving data from the QLC SSDs 204, as requested by an application. The static volume map 208 may have a one-to-one relationship between vLBAs and dLBAs. Specifically, each entry of the volume map 208 may correspond to a vLBA 210. Each entry of the static volume map 208 may be M bytes (B), resulting in a significantly large volume map size (e.g., when M = 17B, volume map size may be greater than 1 TB for 1 PB of storage volume).

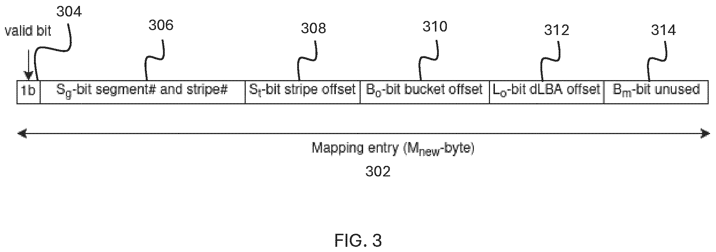

FIG. 3 is a diagram illustrating an entry of a volume map, according to an embodiment.

Each entry 302 of a volume map may include a first region 304 for a valid bit, a second region 306 for a segment number and a stripe number, a third region 308 for a stripe offset, a fourth region 310 for a bucket offset, a fifth region 312 for a dLBA offset, and a sixth region 314 that is unused. The first region 304 may be one bit (b), the second region 306 may be S_{g}-bit (e.g., 14b), the third region 308 may be St-bit (e.g., 5b), the fourth region 310 may be B₀-bit, the fifth region 312 may be L₀-bit, and the sixth region 314 may be Bₘ-bit (e.g., 4b).

The reduced entry size may result in a volume map size that is significantly greater than a GB, which may still exceed the capacity of the persistent memory device, leading to overflow issues.

According to an embodiment, space efficient encoding and decoding of volume and drive metadata may be provided for a variable address range in each volume map entry. A hybrid mapping scheme may be provided for large volume management to amortize space utilization and sequential access. The hybrid mapping scheme may include a configurable, variable granularity volume map that reduces read and write amplification for volume map access, and may be configured based on expected workloads. Mapping entries may be efficiently merged, split, and moved within and between the VVM and the FVM.

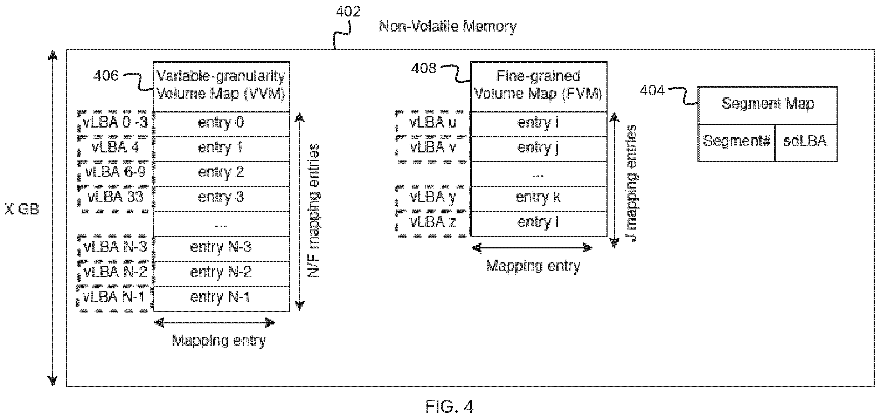

FIG. 4 is a diagram illustrating volume maps in a persistent or non-volatile memory, according to an embodiment. A persistent memory (e.g., a. CXL-attached persistent memory device) 402 may include a segment map 404, a VVM 406, and an FVM 408. The segment map 404 may map a segment number to a drive number and a start dLBA (sdLBA).

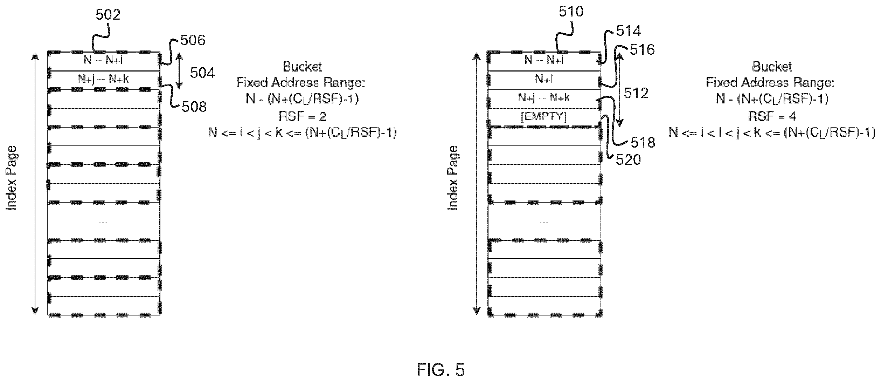

The VVM 406 may be a fixed size volume map with variable vLBA granularity per entry. The VVM 406 may be configured based on expected workload(s) that would use the volume manager. Specifically, multiple sequential vLBAs may be coalesced to store data. The metadata or mapping data for the coalesced vLBAs may be stored as a single entry in the VVM 406, resulting in metadata per entry, instead of per vLBA, as described with respect to FIG. 3. Accordingly, one or more vLBAs are mapped to each dLBA entry, as described in greater detail with respect to FIG. 5. The size of the VVM 406 may be significantly reduced compared to the volume map of FIG. 3, and read and write amplification may be reduced for map access.

An address range of the VVM 406, which is the same as the address range of the volume manager, may be divided into a fixed number of buckets, with each bucket having one or more volume map entries. A bucket address range may be fixed (e.g., 32 vLBAs or 1 stripe), but the number of volume map entries per bucket may be configurable at initialization and may be referred to as a reserve space factor (RSF). The RSF may be set to a value that is a power of 2, but less than cacheline access granularity/entry size, C_{L}/Eₘ (e.g., cacheline access granularity may equal 64B, and RSF = 1, 2, 4, 8, or 16). For example, the maximum size of a bucket may be set to 64B, which provides zero overhead transaction support in CXL-attached devices for the VVM 406, when writing to a stripe. The address range of each volume map entry may be variable, but must fall within the address range of the bucket (stripe address range). Multiple entries for a stripe may be stored inside a bucket.

Accordingly, multiple buckets may constitute a volume map page, Pₘ, (e.g., 512B). Reads to the volume map may occur at a page level, since this provides the best latency and bandwidth. The number of buckets inside a page depends on cacheline size (C_{L}) and RSF. Accesses may be optimized by caching or buffering volume map pages in a host dynamic random access memory (DRAM).

FIG. 5 is a diagram illustrating VVM pages, according to an embodiment. While FIG. 5 illustrates a defined index page size, index page address range, number of buckets, bucket address range, for example, this is for illustrative purposes only, and embodiments are not limited to these defined sizes and ranges. According to a first RSF setting, a first VVM page 502 may have buckets 504 with two entries (i.e., RSF = 2). The buckets 504 may have a fixed address range of C_{L}/RSF vLBAs ranging from N to (N + (C_{L}/RSF) - 1). Each subsequent bucket has a range of a next (C_{L}/RSF) vLBAs (e.g., (N + (C_{L}/RSF)) - (N + 2*(C_{L}/RSF) - 1)). The volume map page 502 may be of size Pₘ, and may have a fixed address range based on the bucket range and the number of buckets. When three coalesced vLBAs are received having a range of N - (N+2), they may be placed in an entry of a bucket that encompasses that range (e.g., a first entry 506 of the bucket with the range of N - (N + (C_{L}/RSF) - 1)). Similarly, when 14 coalesced vLBAs are received having a range of (N+6) - (N+19), they may be placed in an entry of a bucket that encompasses that range (e.g., a second entry 508 of the bucket with the range of N - (N+31).

According to another RSF setting, a second VVM 510 page may have buckets 512 with four entries (i.e., RSF = 4). A first entry 514 is shown with three coalesced vLBAs (N - (N+2)), a second entry 516 is shown with one vLBA (N+3), a third entry 518 is shown with fourteen coalesced vLBAs ((N+6) - (N+19)), and a fourth entry 520 is empty.

If additional vLBA(s) are received for a bucket having entries that are fully occupied, the additional vLBA(s) may be provided to the FVM 408. Alternatively, vLBA(s) of one of the occupied entries may be evicted so that the newly received vLBA(s) may be stored in the entry. This may occur if it is determined that the newly received vLBA(s) have a wider range than a vLBA range in an occupied entry. The evicted vLBA(s) may be provided to the FVM 408.

Referring back to FIG. 4, each entry of the VVM 406 may include a first region indicating a valid bit, a second region indicating a segment number in the drive, and a third region indicating a stripe number in the segment. Each entry may also include a fourth region indicating a stripe offset in the segment, which is used to identify a starting dLBA for the data, and a fifth region indicating an index bucket offset, which is used to identify starting vLBA of the data. Each entry may further include a sixth region indicating a dLBA offset, which is used to identify an end of both the vLBA and the dLBA, and a seventh region indicating a possible entry to the FVM. Specifically, the seventh region may be used to mark if there are entries for the vLBA range of this bucket in the FVM 408, or to identify the number of entries in the FVM for this vLBA range. The format of the seventh region may be dependent on available bits and size. The seventh region may be set only on the first entry of a bucket of the VVM 406.

The FVM 408 is a resizable volume map with a per vLBA granularity (e.g., a one-to-one relationship between vLBA and dLBA entries). As described above, the FVM 408 may receive vLBA(s) when all entries of a bucket encompassing the range of the vLBA(s) are occupied, or when vLBA(s) are evicted from an entry in the VVM 406. Since the FVM 408 has a one-to-one mapping, any coalesced vLBAs that are received may be separated in the encoding for the FVM 408.

The FVM 408 may be dependent on workload. The total size of VVM and FVM may be equal or different. The number of persistent memory accesses may depend on hash collision handling mechanism in FVM. Accesses may be kept between one or two for each query, limited within a stripe.

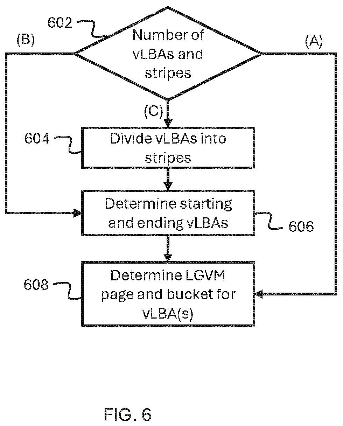

FIG. 6 is a flowchart illustrating a method for pre-processing received vLBAs, according to an embodiment. At 602, the number of vLBAs and stripes may be determined. Specifically, the received vLBA(s) may be determined to be a single received vLBA (A), multiple coalesced vLBAs that are within a single stripe (B), or multiple coalesced vLBAs that are across multiple stripes (C).

If the received vLBAs are multiple coalesced vLBAs across multiple stripes (C), the coalesced vLBAs are divided into stripes, at 604. After dividing into stripes, or if the received vLBAs are within a single stripe (B), a starting vLBA and an ending vLBA may be determined, at 606. A VVM page and a bucket in the VVM that encompasses the range of the received vLBA(s) may then be determined, at 608.

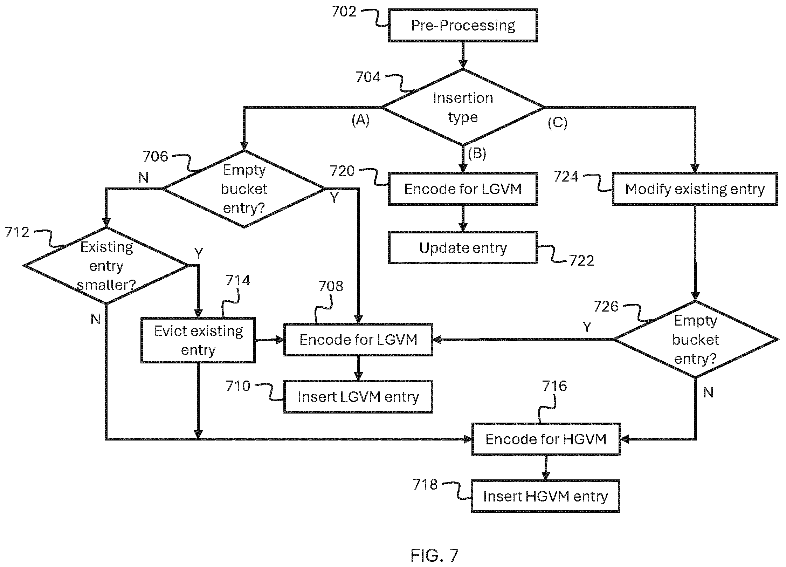

FIG. 7 is a flowchart illustrating a method for vLBA insertion to a volume map in response to a write command, according to an embodiment. At 702, pre-processing of received vLBAs of the write command may be performed, as described above with respect to FIG. 6, to determine a VVM page and bucket for the received vLBA(s). At 704, the write insertion type may be determined. Specifically, with respect to a first insertion type (A), a new entry is received and no entry with the vLBA range of the new request exists. With respect to a second insertion type (B), an update to an old entry is received, where the vLBA range of the new request matches or is larger than the old entry. With respect to a third insertion type (C), an update to partial entry is received, where the vLBA range of the new request partially matches an old entry.

If the new request is for a new entry (i.e., insertion type (A)), it may be determined whether the bucket identified in pre-processing has an empty entry, at 706. If it is determined that the bucket has an empty entry, the vLBA and dLBA may be encoded into a single entry for the VVM, i.e., encoded for low granularity volume mapping (LGVM), at 708, and the single entry may be inserted into the bucket of the VVM, at 710. The bucket entries may also be sorted if necessary. If it is determined that the bucket does not have any empty entries, it may be determined whether an existing entry in the bucket has a smaller vLBA range than the new entry, at 712. If it is determined that there is an existing entry with a smaller range, the vLBAs may be evicted from the entry of the VVM, at 714. The new entry may be encoded for the VVM, at 708, and inserted into the bucket of the VVM, at 710. The evicted vLBAs may be encoded for the FVM, i.e., encoded for high granularity volume mapping (HGVM), at 716, and inserted into one or more entries of the FVM, at 718. If it is determined that there is not an entry with a smaller range, the new entry may be encoded for the FVM, at 716, and inserted into the FVM, at 718.

If the new request is a full update of an existing entry (i.e., insertion type (B)), the vLBA and dLBA may be encoded into a single entry, i.e., encoded for LGVM,, at 720, and the old entry in the VVM may be updated, at 722.

If the new request is partial update of an existing entry (i.e., insertion type (C)), the existing entry may be modified based on a corresponding portion of the new request and the VVM may be updated, at 724. At 726, it may be determined whether the bucket determined in pre-processing has an empty entry. If it is determined that the bucket has an empty entry, the new vLBA and dLBA information of the new request may be encoded into a single entry in the VVM, at 708, and the new entry may be inserted in the VVM, at 710. The bucket entries may also be sorted if necessary. If it is determined that the bucket does not have an empty entry, the new information of the new request may be encoded for the FVM, at 716, and the new entries may be inserted in the FVM, at 718.

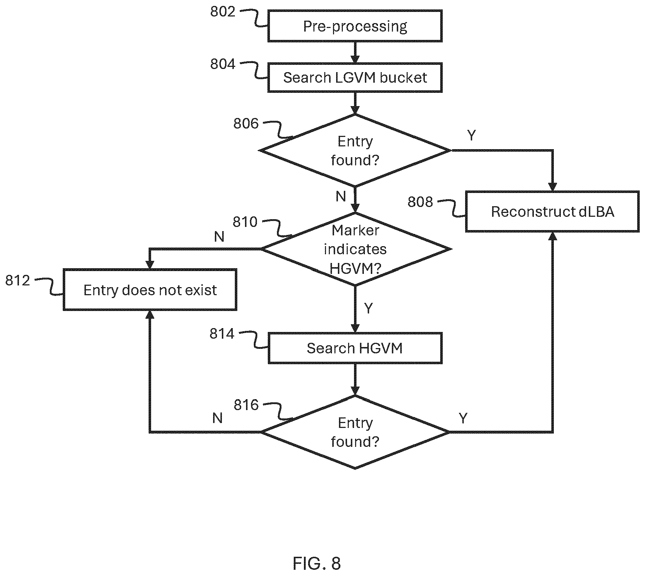

FIG. 8 is a flowchart illustrating a method for retrieving an entry using a volume map in response to a read command, according to an embodiment. At 802, pre-processing of requested vLBA range in the read command may be performed, as described above with respect to FIG. 6, to determine a VVM page and bucket, i.e., an LGVM bucket. At 804, vLBAs in the identified bucket may be searched. At 806, it may be determined if the entry is found. If the entry is found in the VVM, a dLBA may be reconstructed from the entry using a segment map, at 808. If the entry is not found in the VVM, it may be determined whether an entry of the bucket includes a marker indicating that vLBAs in this range exist in the FVM, i.e., a marker indicating HGVM, at 810. If it is determined that corresponding vLBAs do not exist in the FVM, a result may be returned that the entry does not exist, at 812. If it is determined that vLBAs exist in the FVM, the FVM, i.e., HGVM, may be searched, at 814. At 816, it may be determined if the entry is found in the FVM. If an entry is found in the FVM, a dLBA may be reconstructed from returned entries using a segment map, at 808. If an entry is not found, a result is returned that the entry does not exist, at 812.

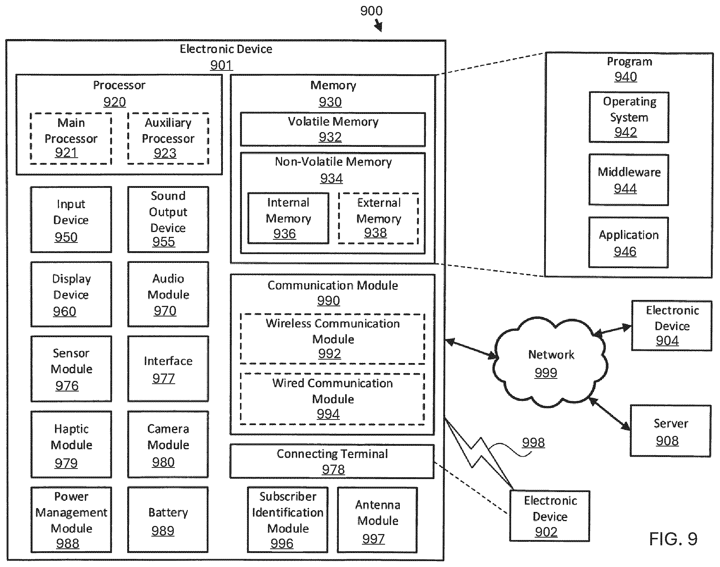

FIG. 9 is a block diagram of an electronic device in a network environment 900 for processing commands, according to an embodiment. This electronic device may be one of various types of electronic devices that utilizes storage devices described above in FIGS. 1 and 6.

Referring to FIG. 9, an electronic device 901 in a network environment 900 may communicate with an electronic device 902 via a first network 998 (e.g., a short-range wireless communication network), or an electronic device 904 or a server 908 via a second network 999 (e.g., a long-range wireless communication network). The electronic device 901 may communicate with the electronic device 904 via the server 908. The electronic device 901 may include a processor (or controller) 920, a memory 930, an input device 950, a sound output device 955, a display device 960, an audio module 970, a sensor module 976, an interface 977, a haptic module 979, a camera module 980, a power management module 988, a battery 989, a communication module 990, a subscriber identification module (SIM) card 996, or an antenna module 997. In one embodiment, at least one (e.g., the display device 960 or the camera module 980) of the components may be omitted from the electronic device 901, or one or more other components may be added to the electronic device 901. Some of the components may be implemented as a single integrated circuit (IC). For example, the sensor module 976 (e.g., a fingerprint sensor, an iris sensor, or an illuminance sensor) may be embedded in the display device 960 (e.g., a display).

The processor 920 may execute software (e.g., a program 940) to control at least one other component (e.g., a hardware or a software component) of the electronic device 901 coupled with the processor 920 and may perform various data processing or computations. The processor 920 may include the volume manager 110 of FIG. 1.

As at least part of the data processing or computations, the processor 920 may load a command or data received from a host or another component (e.g., the sensor module 976 or the communication module 990) in volatile memory 932, process the command or the data stored in the volatile memory 932, and store resulting data in non-volatile memory 934. The processor 920 may include a main processor 921 (e.g., a central processing unit (CPU) or an application processor (AP)), and an auxiliary processor 923 (e.g., a graphics processing unit (GPU), an image signal processor (ISP), a sensor hub processor, or a communication processor (CP)) that is operable independently from, or in conjunction with, the main processor 921. Additionally or alternatively, the auxiliary processor 923 may be adapted to consume less power than the main processor 921, or execute a particular function. The auxiliary processor 923 may be implemented as being separate from, or a part of, the main processor 921.

The auxiliary processor 923 may control at least some of the functions or states related to at least one component (e.g., the display device 960, the sensor module 976, or the communication module 990) among the components of the electronic device 901, instead of the main processor 921 while the main processor 921 is in an inactive (e.g., sleep) state, or together with the main processor 921 while the main processor 921 is in an active state (e.g., executing an application). The auxiliary processor 923 (e.g., an image signal processor or a communication processor) may be implemented as part of another component (e.g., the camera module 980 or the communication module 990) functionally related to the auxiliary processor 923.

The memory 930 may store various data used by at least one component (e.g., the processor 920 or the sensor module 976) of the electronic device 901. The various data may include, for example, software (e.g., the program 940) and input data or output data for a command related thereto. The memory 930 may include the volatile memory 932 or the non-volatile memory 934. Non-volatile memory 934 may include internal memory 936 and/or external memory 938.

The program 940 may be stored in the memory 930 as software, and may include, for example, an operating system (OS) 942, middleware 944, or an application 946.

The input device 950 may receive a command or data to be used by another component (e.g., the processor 920) of the electronic device 901, from the outside (e.g., a user) of the electronic device 901. The input device 950 may include, for example, a microphone, a mouse, or a keyboard.

The sound output device 955 may output sound signals to the outside of the electronic device 901. The sound output device 955 may include, for example, a speaker or a receiver. The speaker may be used for general purposes, such as playing multimedia or recording, and the receiver may be used for receiving an incoming call. The receiver may be implemented as being separate from, or a part of, the speaker.

The display device 960 may visually provide information to the outside (e.g., a user) of the electronic device 901. The display device 960 may include, for example, a display, a hologram device, or a projector and control circuitry to control a corresponding one of the display, hologram device, and projector. The display device 960 may include touch circuitry adapted to detect a touch, or sensor circuitry (e.g., a pressure sensor) adapted to measure the intensity of force incurred by the touch.

The audio module 970 may convert a sound into an electrical signal and vice versa. The audio module 970 may obtain the sound via the input device 950 or output the sound via the sound output device 955 or a headphone of an external electronic device 902 directly (e.g., wired) or wirelessly coupled with the electronic device 901.

The sensor module 976 may detect an operational state (e.g., power or temperature) of the electronic device 901 or an environmental state (e.g., a state of a user) external to the electronic device 901, and then generate an electrical signal or data value corresponding to the detected state. The sensor module 976 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 977 may support one or more specified protocols to be used for the electronic device 901 to be coupled with the external electronic device 902 directly (e.g., wired) or wirelessly. The interface 977 may include, for example, a high- definition multimedia interface (HDMI), a universal serial bus (USB) interface, a secure digital (SD) card interface, or an audio interface.

A connecting terminal 978 may include a connector via which the electronic device 901 may be physically connected with the external electronic device 902. The connecting terminal 978 may include, for example, an HDMI connector, a USB connector, an SD card connector, or an audio connector (e.g., a headphone connector).

The haptic module 979 may convert an electrical signal into a mechanical stimulus (e.g., a vibration or a movement) or an electrical stimulus which may be recognized by a user via tactile sensation or kinesthetic sensation. The haptic module 979 may include, for example, a motor, a piezoelectric element, or an electrical stimulator.

The camera module 980 may capture a still image or moving images. The camera module 980 may include one or more lenses, image sensors, image signal processors, or flashes. The power management module 988 may manage power supplied to the electronic device 901. The power management module 988 may be implemented as at least part of, for example, a power management integrated circuit (PMIC).

The battery 989 may supply power to at least one component of the electronic device 901. The battery 989 may include, for example, a primary cell which is not rechargeable, a secondary cell which is rechargeable, or a fuel cell.

The communication module 990 may support establishing a direct (e.g., wired) communication channel or a wireless communication channel between the electronic device 901 and the external electronic device (e.g., the electronic device 902, the electronic device 904, or the server 908) and performing communication via the established communication channel. The communication module 990 may include one or more communication processors that are operable independently from the processor 920 (e.g., the AP) and supports a direct (e.g., wired) communication or a wireless communication. The communication module 990 may include a wireless communication module 992 (e.g., a cellular communication module, a short-range wireless communication module, or a global navigation satellite system (GNSS) communication module) or a wired communication module 994 (e.g., a local area network (LAN) communication module or a power line communication (PLC) module). A corresponding one of these communication modules may communicate with the external electronic device via the first network 998 (e.g., a short-range communication network, such as BLUETOOTH^{™}, wireless-fidelity (Wi-Fi) direct, or a standard of the Infrared Data Association (IrDA)) or the second network 999 (e.g., a long-range communication network, such as a cellular network, the Internet, or a computer network (e.g., LAN or wide area network (WAN)). These various types of communication modules may be implemented as a single component (e.g., a single IC), or may be implemented as multiple components (e.g., multiple ICs) that are separate from each other. The wireless communication module 992 may identify and authenticate the electronic device 901 in a communication network, such as the first network 998 or the second network 999, using subscriber information (e.g., international mobile subscriber identity (IMSI)) stored in the subscriber identification module 996.

The antenna module 997 may transmit or receive a signal or power to or from the outside (e.g., the external electronic device) of the electronic device 901. The antenna module 997 may include one or more antennas, and, therefrom, at least one antenna appropriate for a communication scheme used in the communication network, such as the first network 998 or the second network 999, may be selected, for example, by the communication module 990 (e.g., the wireless communication module 992). The signal or the power may then be transmitted or received between the communication module 990 and the external electronic device via the selected at least one antenna.

Commands or data may be transmitted or received between the electronic device 901 and the external electronic device 904 via the server 908 coupled with the second network 999. Each of the electronic devices 902 and 904 may be a device of a same type as, or a different type, from the electronic device 901. All or some of operations to be executed at the electronic device 901 may be executed at one or more of the external electronic devices 902, 904, or 908. For example, if the electronic device 901 should perform a function or a service automatically, or in response to a request from a user or another device, the electronic device 901, instead of, or in addition to, executing the function or the service, may request the one or more external electronic devices to perform at least part of the function or the service. The one or more external electronic devices receiving the request may perform the at least part of the function or the service requested, or an additional function or an additional service related to the request and transfer an outcome of the performing to the electronic device 901. The electronic device 901 may provide the outcome, with or without further processing of the outcome, as at least part of a reply to the request. To that end, a cloud computing, distributed computing, or client-server computing technology may be used, for example.

Embodiments of the subject matter and the operations described in this specification may be implemented in digital electronic circuitry, or in computer software, firmware, or hardware, including the structures disclosed in this specification and their structural equivalents, or in combinations of one or more of them. Embodiments of the subject matter described in this specification may be implemented as one or more computer programs, i.e., one or more modules of computer-program instructions, encoded on computer-storage medium for execution by, or to control the operation of data-processing apparatus. Alternatively or additionally, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer-storage medium can be, or be included in, a computer-readable storage device, a computer-readable storage substrate, a random or serial-access memory array or device, or a combination thereof. Moreover, while a computer-storage medium is not a propagated signal, a computer-storage medium may be a source or destination of computer-program instructions encoded in an artificially-generated propagated signal. The computer-storage medium can also be, or be included in, one or more separate physical components or media (e.g., multiple CDs, disks, or other storage devices). Additionally, the operations described in this specification may be implemented as operations performed by a data-processing apparatus on data stored on one or more computer-readable storage devices or received from other sources.

While this specification may contain many specific implementation details, the implementation details should not be construed as limitations on the scope of any claimed subject matter, but rather be construed as descriptions of features specific to particular embodiments. Certain features that are described in this specification in the context of separate embodiments may also be implemented in combination in a single embodiment. Conversely, various features that are described in the context of a single embodiment may also be implemented in multiple embodiments separately or in any suitable subcombination. Moreover, although features may be described above as acting in certain combinations and even initially claimed as such, one or more features from a claimed combination may in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

## Claims

1. A operation method of a volume manager comprising:
receiving a command with a corresponding volume logical block address, vLBA, set; **characterized by**:
determining a bucket of a variable-granularity volume map, VVM, for block volume storage in a storage device, based on the corresponding vLBA set, wherein entries of the VVM are divided into buckets and the entries comprise a variable vLBA range; and
determining an entry for the vLBA set in the VVM or a fine-grained volume map, FVM, for the block volume storage, based on the determined bucket, wherein the FVM comprises a per vLBA granularity.

2. The operation method of claim 1, wherein the buckets correspond to respective vLBA ranges, and the corresponding vLBA set is within a vLBA range of the determined bucket.

3. The operation method of claim 1 or 2, wherein the command is a write command and the determined bucket comprises an empty entry, and further comprising:
a) encoding the corresponding vLBA set for the VVM, and writing the encoded vLBA set to the entry of the VVM; and/or
b) updating an existing entry of the VVM with a portion of the corresponding vLBA set, encoding a remainder of the corresponding vLBA set for the VVM, and writing the encoded remainder of the vLBA set to the entry of the VVM.

4. The operation method of claim 1 or 2, wherein the command is a write command and the determined bucket is without an empty entry, and further comprising:
a) encoding the corresponding vLBA set for the FVM, and writing the encoded vLBA set to the FVM; and/or
b) evicting a vLBA set from the entry of the VVM, encoding the corresponding vLBA set for the VVM, writing the encoded vLBA set to the entry of the VVM, encoding the evicted vLBA set for the FVM, and writing the evicted vLBA set to the FVM; and/or
c) updating an existing entry of the VVM with a portion of the corresponding vLBA set, encoding a remainder of the corresponding vLBA set for the FVM, and writing the encoded remainder of the vLBA set to the FVM.

5. The operation method of any one of the previous claims, wherein the command is write command, and further comprising:
encoding the corresponding vLBA set for the VVM; and
updating the entry of the VVM with the encoded vLBA set.

6. The operation method of claim 1 or 2, wherein the command is read command, and the entry is in the VVM, and further comprising:
reconstructing a drive logical block address, dLBA, of the entry using decoded information from the entry and a segment map for the block volume storage.

7. The operation method of claim 1 or 2, wherein the command is a read command and an entry marker in the determined bucket indicates FVM storage, and further comprising:
reconstructing a dLBA of the entry of the FVM using a segment map for the block volume storage.

8. A device comprising:
a controller; and
a non-transitory computer readable storage medium storing instructions that, when executed, cause the controller to:
receive a command with a corresponding volume logical block address, vLBA, set;
**characterized in that** the controller is further configured to:
determine a bucket of a variable-granularity volume map, VVM, for block volume storage in a storage device, based on the corresponding vLBA set, wherein entries of the VVM are divided into buckets and the entries comprise a variable vLBA range; and
determine an entry for the vLBA set in the VVM or a fine-grained volume map, FVM, for the block volume storage, based on the determined bucket, wherein the FVM comprises a per vLBA granularity.

9. The device of claim 8, wherein the buckets correspond to respective vLBA ranges, and the corresponding vLBA set is within a vLBA range of the determined bucket.

10. The device of claim 8 or 9, wherein the command comprises a write command, the determined bucket comprises an empty entry, and the instructions further cause the controller to:
a) encode the corresponding vLBA set for the VVM, and write the encoded vLBA set to the entry of the VVM; and/or
b) update an existing entry of the VVM with a portion of the corresponding vLBA set, encode a remainder of the corresponding vLBA set for the VVM, and write the encoded remainder of the vLBA set to the entry of the VVM.

11. The device of claim 8 or 9, wherein the command is a write command, the determined bucket is without an empty entry, and the instructions further cause the controller to:
a) encode the corresponding vLBA set for the FVM, and write the encoded vLBA set to the FVM; and/or
b) evict a vLBA set from the entry of the VVM, encode the corresponding vLBA set for the VVM, write the encoded vLBA set to the entry of the VVM, encode the evicted vLBA set for the FVM, and write the evicted vLBA set to the FVM; and/or
c) update an existing entry of the VVM with a portion of the corresponding vLBA set, encode a remainder of the corresponding vLBA set for the FVM, and write the encoded remainder of the vLBA set to the FVM.

12. The device of any one of claims 8 to 11, wherein the command is write command, and the instructions further cause the controller to:
encode the corresponding vLBA set for the VVM; and
update the entry of the VVM with the encoded vLBA set.

13. The device of claim 8 or 9, wherein the command is read command, the entry is in the VVM, and the instructions further cause the controller to:
reconstruct a drive logical block address, dLBA, of the entry using decoded information from the entry and a segment map for the block volume storage.

14. The device of claim 8 or 9, wherein the command is a read command, an entry marker in the determined bucket indicates FVM storage, and the instructions further cause the controller to:
reconstruct a dLBA of the entry of the FVM using a segment map for the block volume storage.

## Patentansprüche

1. Betriebsverfahren für einen Volume-Manager, umfassend:
Empfangen eines Befehls mit einem entsprechenden Satz einer logischen Blockadresse eines Volumens (vLBA);
**gekennzeichnet durch**:
Ermitteln eines Bucket von einer Volumenzuordnungstabelle mit variabler Granularität, VVM, für einen Blockvolumenspeicher in einer Speichervorrichtung basierend auf dem entsprechenden vLBA-Satz, wobei Einträge der VVM in Buckets unterteilt sind und die Einträge einen variablen vLBA-Bereich aufweisen; und
Ermitteln eines Eintrags für den vLBA-Satz in der VVM oder einer feingranularen Volumenzuordnungstabelle, FVM, für den Blockvolumenspeicher basierend auf dem ermittelten Bucket, wobei die FVM eine Granularität pro vLBA aufweist.

2. Betriebsverfahren nach Anspruch 1, wobei die Buckets jeweiligen vLBA-Bereichen entsprechen und sich der entsprechende vLBA-Satz innerhalb eines vLBA-Bereichs des ermittelten Buckets befindet.

3. Betriebsverfahren nach Anspruch 1 oder 2, wobei der Befehl ein Schreibbefehl ist und der ermittelte Bucket einen leeren Eintrag aufweist, und ferner umfassend:
a) Kodieren des entsprechenden vLBA-Satzes für die VVM und Schreiben des kodierten vLBA-Satzes in den Eintrag der VVM; und/oder
b) Aktualisieren eines bestehenden Eintrags der VVM mit einem Abschnitt des entsprechenden vLBA-Satzes, Kodieren eines Restes des entsprechenden vLBA-Satzes für die VVM und Schreiben des kodierten Restes des vLBA-Satzes in den Eintrag der VVM.

4. Betriebsverfahren nach Anspruch 1 oder 2, wobei der Befehl ein Schreibbefehl ist und der ermittelte Bucket keinen leeren Eintrag enthält, und ferner umfassend:
a) Kodieren des entsprechenden vLBA-Satzes für die FVM und Schreiben des kodierten vLBA-Satzes in die FVM; und/oder
b) Verdrängen eines vLBA-Satzes aus dem Eintrag der VVM, Kodieren des entsprechenden vLBA-Satzes für die VVM, Schreiben des kodierten vLBA-Satzes in den Eintrag der VVM, Kodieren des verdrängten vLBA-Satzes für die FVM und Schreiben des verdrängten vLBA-Satzes in die FVM; und/oder
c) Aktualisieren eines bestehenden Eintrags der VVM mit einem Abschnitt des entsprechenden vLBA-Satzes, Kodieren eines Restes des entsprechenden vLBA-Satzes für die FVM und Schreiben des kodierten Restes des vLBA-Satzes in die FVM.

5. Betriebsverfahren nach einem der vorstehenden Ansprüche, wobei es sich bei dem Befehl um einen Schreibbefehl handelt und das Verfahren ferner umfasst:
Kodieren des entsprechenden vLBA-Satzes für die VVM; und
Aktualisieren des Eintrags der VVM mit dem kodierten vLBA-Satz.

6. Betriebsverfahren nach Anspruch 1 oder 2, wobei es sich bei dem Befehl um einen Lesebefehl handelt und der Eintrag sich in der VVM befindet, und ferner umfassend:
Rekonstruieren einer logischen Blockadresse eines Laufwerks, dLBA, des Eintrags unter Verwendung dekodierter Informationen aus dem Eintrag und einer Segmentzuordnung für den Blockvolumenspeicher.

7. Betriebsverfahren nach Anspruch 1 oder 2, wobei der Befehl ein Lesebefehl ist und ein Eintragsmarker in dem ermittelten Bucket eine FVM-Speicherung anzeigt, und ferner umfassend:
Rekonstruieren einer dLBA des Eintrags der FVM unter Verwendung einer Segmentzuordnung für den Blockvolumenspeicher.

8. Vorrichtung, aufweisend:
eine Steuerung; und
ein nichttransitorisches, computerlesbares Speichermedium, welches Befehle speichert, die bei deren Ausführung bewirken, dass die Steuerung:
einen Befehl mit einem entsprechenden Satz einer logischen Blockadresse eines Volumens (vLBA) empfängt;
**dadurch gekennzeichnet, dass** die Steuerung ferner so konfiguriert ist, dass sie:
einen Bucket von einer Volumenzuordnungstabelle mit variabler Granularität, VVM, für einen Blockvolumenspeicher in einer Speichervorrichtung basierend auf dem entsprechenden vLBA-Satz ermittelt, wobei Einträge der VVM in Buckets unterteilt sind und die Einträge einen variablen vLBA-Bereich aufweisen; und
einen Eintrag für den vLBA-Satz in der VVM oder einer feingranularen Volumenzuordnungstabelle, FVM, für den Blockvolumenspeicher basierend auf dem ermittelten Bucket ermittelt, wobei die FVM eine Granularität pro vLBA aufweist.

9. Vorrichtung nach Anspruch 8, wobei die Buckets jeweiligen vLBA-Bereichen entsprechen und der entsprechende vLBA-Satz innerhalb eines vLBA-Bereichs des ermittelten Buckets liegt.

10. Vorrichtung nach Anspruch 8 oder 9, wobei der Befehl einen Schreibbefehl aufweist, der ermittelte Bucket einen leeren Eintrag aufweist und die Anweisungen ferner bewirken, dass die Steuerung:
a) den entsprechenden vLBA-Satz für die VVM kodiert und den kodierten vLBA-Satz in den Eintrag der VVM schreibt; und/oder
b) einen bestehenden Eintrag der VVM mit einem Abschnitt des entsprechenden vLBA-Satzes aktualisiert, einen Rest des entsprechenden vLBA-Satzes für die VVM kodiert und den kodierten Rest des vLBA-Satzes in den Eintrag der VVM schreibt.

11. Vorrichtung nach Anspruch 8 oder 9, wobei der Befehl ein Schreibbefehl ist, der ermittelte Bucket keinen leeren Eintrag aufweist und die Anweisungen ferner bewirken, dass die Steuerung:
a) den entsprechenden vLBA-Satz für die FVM kodiert und den kodierten vLBA-Satz in die FVM schreibt; und/oder
b) einen vLBA-Satz aus dem Eintrag der VVM verdrängt, den entsprechenden vLBA-Satz für die VVM kodiert, den kodierten vLBA-Satz in den Eintrag der VVM schreibt, den verdrängten vLBA-Satz für die FVM kodiert und den verdrängten vLBA-Satz in die FVM schreibt; und/oder
c) einen bestehenden Eintrag der VVM mit einem Abschnitt des entsprechenden vLBA-Satzes aktualisiert, einen Rest des entsprechenden vLBA-Satzes für die FVM kodiert und den kodierten Rest des vLBA-Satzes in die FVM schreibt.

12. Vorrichtung nach einem der Ansprüche 8 bis 11, wobei der Befehl ein Schreibbefehl ist und die Anweisungen ferner bewirken, dass die Steuerung:
den entsprechenden vLBA-Satz für die VVM kodiert; und
den Eintrag der VVM mit dem kodierten vLBA-Satz aktualisiert.

13. Vorrichtung nach Anspruch 8 oder 9, wobei der Befehl ein Lesebefehl ist, sich der Eintrag in der VVM befindet und die Anweisungen ferner bewirken, dass die Steuerung:
eine logische Blockadresse eines Laufwerks (dLBA) des Eintrags unter Verwendung decodierter Informationen aus dem Eintrag und einer Segmentzuordnung für den Blockvolumenspeicher rekonstruiert.

14. Vorrichtung nach Anspruch 8 oder 9, wobei der Befehl ein Lesebefehl ist, ein Eintragsmarker in dem ermittelten Bucket eine FVM-Speicherung anzeigt und die Anweisungen ferner bewirken, dass die Steuerung:
eine dLBA des Eintrags der FVM unter Verwendung einer Segmentzuordnung für den Blockvolumenspeicher rekonstruiert.

## Revendications

1. Procédé de fonctionnement d'un gestionnaire de volumes, comprenant :
la réception d'une commande avec un ensemble correspondant d'adresses de blocs logiques de volume, vLBA ;
**caractérisé par** :
la détermination, sur la base de l'ensemble correspondant de vLBA, d'un compartiment d'un mappage de volume à granularité variable, VVM, pour un stockage de volumes par blocs dans un dispositif de stockage, les entrées du VVM étant regroupées en compartiments et lesdites entrées comprenant une plage variable de vLBA ; et
la détermination, sur la base du compartiment déterminé, d'une entrée pour l'ensemble de vLBA dans le VVM ou dans un mappage de volume à granularité fine, FVM, pour le stockage de volumes par blocs, le FVM présentant une granularité par vLBA.

2. Procédé de fonctionnement selon la revendication 1, dans lequel les compartiments correspondent à des plages respectives de vLBA, et l'ensemble correspondant de vLBA est compris dans une plage de vLBA du compartiment déterminé.

3. Procédé de fonctionnement selon la revendication 1 ou 2, dans lequel la commande est une commande d'écriture et le compartiment déterminé comprend une entrée vide, le procédé comprenant en outre :
a) le codage de l'ensemble correspondant de vLBA pour le VVM et l'écriture de l'ensemble de vLBA codé dans l'entrée du VVM ; et/ou
b) l'actualisation d'une entrée existante du VVM avec une partie de l'ensemble correspondant de vLBA, le codage d'une partie restante de l'ensemble correspondant de vLBA pour le VVM et l'écriture de la partie restante codée de l'ensemble de vLBA dans l'entrée du VVM.

4. Procédé de fonctionnement selon la revendication 1 ou 2, dans lequel la commande est une commande d'écriture et le compartiment déterminé ne comprend aucune entrée vide, le procédé comprenant en outre :
a) le codage de l'ensemble correspondant de vLBA pour le FVM et l'écriture de l'ensemble de vLBA codé dans le FVM ; et/ou
b) le retrait d'un ensemble de vLBA de l'entrée du VVM, le codage de l'ensemble correspondant de vLBA pour le VVM, l'écriture de l'ensemble de vLBA codé dans l'entrée du VVM, le codage de l'ensemble de vLBA retiré pour le FVM et l'écriture de l'ensemble de vLBA retiré dans le FVM ; et/ou
c) l'actualisation d'une entrée existante du VVM avec une partie de l'ensemble correspondant de vLBA, le codage d'une partie restante de l'ensemble correspondant de vLBA pour le FVM et l'écriture de la partie restante codée de l'ensemble de vLBA dans le FVM.

5. Procédé de fonctionnement selon l'une quelconque des revendications précédentes, dans lequel la commande est une commande d'écriture, le procédé comprenant en outre :
le codage de l'ensemble correspondant de vLBA pour le VVM ; et
l'actualisation de l'entrée du VVM avec l'ensemble de vLBA codé.

6. Procédé de fonctionnement selon la revendication 1 ou 2, dans lequel la commande est une commande de lecture et l'entrée se trouve dans le VVM, le procédé comprenant en outre :
la reconstruction d'une adresse de bloc logique d'unité de stockage, dLBA, de l'entrée à l'aide d'informations décodées à partir de l'entrée et d'un mappage de segments pour le stockage de volumes par blocs.

7. Procédé de fonctionnement selon la revendication 1 ou 2, dans lequel la commande est une commande de lecture et un marqueur d'entrée dans le compartiment déterminé indique un stockage dans le FVM, le procédé comprenant en outre :
la reconstruction d'une dLBA de l'entrée du FVM à l'aide d'un mappage de segments pour le stockage de volumes par blocs.

8. Dispositif comprenant :
un contrôleur ; et
un support de stockage non transitoire lisible par ordinateur, sur lequel sont stockées des instructions qui, lorsqu'elles sont exécutées, amènent le contrôleur à :
recevoir une commande avec un ensemble correspondant d'adresses de blocs logiques de volume, vLBA ;
**caractérisé en ce que** le contrôleur est en outre configuré pour :
déterminer, sur la base de l'ensemble correspondant de vLBA, un compartiment d'un mappage de volume à granularité variable, VVM, pour un stockage de volumes par blocs dans un dispositif de stockage, les entrées du VVM étant regroupées en compartiments et lesdites entrées comprenant une plage variable de vLBA ; et
déterminer, sur la base du compartiment déterminé, une entrée pour l'ensemble de vLBA dans le VVM ou dans un mappage de volume à granularité fine, FVM, pour le stockage de volumes par blocs, le FVM présentant une granularité par vLBA.

9. Dispositif selon la revendication 8, dans lequel les compartiments correspondent à des plages respectives de vLBA, et l'ensemble correspondant de vLBA est compris dans une plage de vLBA du compartiment déterminé.

10. Dispositif selon la revendication 8 ou 9, dans lequel la commande comprend une commande d'écriture, le compartiment déterminé comprend une entrée vide, et les instructions amènent en outre le contrôleur à :
a) coder l'ensemble correspondant de vLBA pour le VVM et écrire l'ensemble de vLBA codé dans l'entrée du VVM ; et/ou
b) actualiser une entrée existante du VVM avec une partie de l'ensemble correspondant de vLBA, coder une partie restante de l'ensemble correspondant de vLBA pour le VVM et écrire la partie restante codée de l'ensemble de vLBA dans l'entrée du VVM.

11. Dispositif selon la revendication 8 ou 9, dans lequel la commande est une commande d'écriture, le compartiment déterminé ne comprend aucune entrée vide, et les instructions amènent en outre le contrôleur à :
a) coder l'ensemble correspondant de vLBA pour le FVM et écrire l'ensemble de vLBA codé dans le FVM ; et/ou
b) retirer un ensemble de vLBA de l'entrée du VVM, coder l'ensemble correspondant de vLBA pour le VVM, écrire l'ensemble de vLBA codé dans l'entrée du VVM, coder l'ensemble de vLBA retiré pour le FVM et écrire l'ensemble de vLBA retiré dans le FVM ; et/ou
c) actualiser une entrée existante du VVM avec une partie de l'ensemble correspondant de vLBA, coder une partie restante de l'ensemble correspondant de vLBA pour le FVM et écrire la partie restante codée de l'ensemble de vLBA dans le FVM.

12. Dispositif selon l'une quelconque des revendications 8 à 11, dans lequel la commande est une commande d'écriture, les instructions amenant en outre le contrôleur à :
coder l'ensemble correspondant de vLBA pour le VVM ; et
actualiser l'entrée du VVM avec l'ensemble de vLBA codé.

13. Dispositif selon la revendication 8 ou 9, dans lequel la commande est une commande de lecture, l'entrée se trouve dans le VVM, et les instructions amènent en outre le contrôleur à :
reconstruire une adresse de bloc logique d'unité de stockage, dLBA, de l'entrée à l'aide d'informations décodées à partir de l'entrée et d'un mappage de segments pour le stockage de volumes par blocs.

14. Dispositif selon la revendication 8 ou 9, dans lequel la commande est une commande de lecture, un marqueur d'entrée dans le compartiment déterminé indique un stockage dans le FVM, et les instructions amènent en outre le contrôleur à :
reconstruire une dLBA de l'entrée du FVM à l'aide d'un mappage de segments pour le stockage de volumes par blocs.
